# EUROPEAN PATENT APPLICATION

(11) **EP 4 645 931 A1**
(43) Date of publication of application: **05.11.2025**
(21) Application number: 23957691.1
(22) Date of filing: 02.11.2023
(51) Int. Cl.: H04W 16/28

(54) **USER EQUIPMENT, NODE, AND COMMUNICATION METHOD**

(71) Applicant: Kyocera Corporation, Kyoto-shi, Kyoto 612-8501 (JP)
(72) Inventor: IKUTA Koji, Kyoto-shi, 612-8501 (JP); FUJISHIRO Masato, Kyoto-shi, 612-8501 (JP); HATA Mitsutaka, Kyoto-shi, 612-8501 (JP)
(74) Representative: TBK
(86) International application number: PCT/JP2023/039644
(87) International publication number: WO 2025/094365

(57) **Abstract**

A user equipment is a user equipment for performing wireless communication with a node in a mobile communication system, the user equipment including: a receiver that receives a first reference signal transmitted by the node; a controller that measures a resource of the first reference signal, calculates a precoder to be used for transmitting a physical uplink shared channel based on the measurement of the resource of the first reference signal, and applies the precoder to the physical uplink shared channel; and a transmitter that transmits, to the node, the physical uplink shared channel to which the precoder has been applied.

## Description

### TECHNICAL FIELD

The present invention relates to a user equipment, a node, and a communication method.

### BACKGROUND OF INVENTION

In new radio (NR), a 5th generation (5G) standard formulated by the 3rd generation partnership project (3GPP (registered trademark), hereinafter the same) which is a standardization project for mobile communication systems, a codebook type and a non-codebook type transmission method are defined as a method of transmitting a physical uplink shared channel (PUSCH). In the non-codebook type, a precoder determined by the node is applied to the transmission of the PUSCH.

A problem with the non-codebook type transmission method is that it takes a long time before the precoder is applied to the PUSCH. In the non-codebook type transmission method, two round trips of communication are made between a node in a network of a mobile communication system (also simply referred to as a "node") and a user equipment (UE), from when the node transmits a CSI-RS to the UE until when the node receives a PUSCH to which a precoder has been applied.

Thus, particularly in an environment in which a propagation channel varies significantly, the propagation channel may vary significantly between the time the precoder is calculated and the time the precoder is applied, resulting in a non-optimal precoder. An environment in which the propagation channel varies significantly is, for example, an environment in which a UE moves at high speed, or an environment in which wireless communication using high frequency bands such as millimeter waves or sub-terahertz waves is used. In wireless communication using the latter high frequency band, the beam is sharper than in the low frequency band, and thus even a slight change in the environment can cause larger channel variations. When the precoder is not optimal, there are cases where the throughput is reduced due to an increase in inter-stream interference in the received signal and a deterioration in modulation accuracy.

### CITATION LIST

### NON-PATENT LITERATURE

Non-Patent Document 1: 3GPP Technical Specification: TS 38.214 V18.0.0 (2023-09)

### SUMMARY

A user equipment according to a first aspect is a user equipment for performing wireless communication with a node in a mobile communication system, the user equipment including: a receiver configured to receive a first reference signal transmitted by the node; a controller configured to measure a resource of the first reference signal, calculate a precoder to be used for transmitting a physical uplink shared channel based on the measurement of the resource of the first reference signal, and apply the precoder to the physical uplink shared channel; and a transmitter configured to transmit, to the node, the physical uplink shared channel to which the precoder has been applied.

A node according to a second aspect is a node for performing wireless communication with a user equipment in a mobile communication system, the node including: a transmitter configured to transmit a first reference signal to the user equipment; and a receiver configured to receive, from the user equipment, a physical uplink shared channel that is transmitted by the user equipment by applying a precoder calculated based on measurement of a resource of the first reference signal.

A communication method according to a third aspect is a communication method used in a user equipment for performing wireless communication with a node in a mobile communication system, the communication method including: receiving a first reference signal transmitted by the node; measuring a resource of the first reference signal, calculating a precoder to be used for transmitting a physical uplink shared channel based on the measurement of the resource of the first reference signal, and applying the precoder to the physical uplink shared channel; and transmitting, to the node, the physical uplink shared channel to which the precoder has been applied.

A communication method according to a fourth aspect is a communication method used in a node for performing wireless communication with a user equipment in a mobile communication system, the communication method including: transmitting a first reference signal to the user equipment; and receiving, from the user equipment, a physical uplink shared channel that is transmitted by the user equipment by applying a precoder calculated based on measurement of a resource of the first reference signal.

### BRIEF DESCRIPTION OF THE DRAWINGS

FIG. 1 is a diagram illustrating a configuration example of a mobile communication system according to an embodiment.
FIG. 2 is a diagram illustrating a configuration example of a protocol stack of a U-plane radio interface that handles data.
FIG. 3 is a diagram illustrating a configuration example of a protocol stack of a C-plane radio interface that handles signaling (control signal).
FIG. 4 is a diagram illustrating a general procedure in which a precoder determined in a non-codebook type is applied to transmit a physical uplink shared channel.
FIG. 5 is a diagram illustrating a configuration example of a user equipment (UE) according to the embodiment.
FIG. 6 is a diagram illustrating a configuration example of a node according to the embodiment.
FIG. 7 is a diagram illustrating an example of a system operation according to a first embodiment.
FIG. 8 is a diagram illustrating an example of a system operation according to a variation of the first embodiment.
FIG. 9 is a diagram illustrating an example of a system operation according to a second embodiment.
FIG. 10 is a diagram illustrating an example of a system operation according to a third embodiment.
FIG. 11 is a diagram illustrating an example of a system operation according to a fourth embodiment.
FIG. 12 is a diagram illustrating an example of a system operation according to a fifth embodiment.
FIG. 13 is a diagram illustrating an example of a system operation according to a variation of the fifth embodiment.

### DESCRIPTION OF EMBODIMENTS

A mobile communication system according to embodiments will be described below with reference to the drawings. In the description of the drawings, the same or similar parts are denoted by the same or similar reference numerals.

### (1) First Embodiment

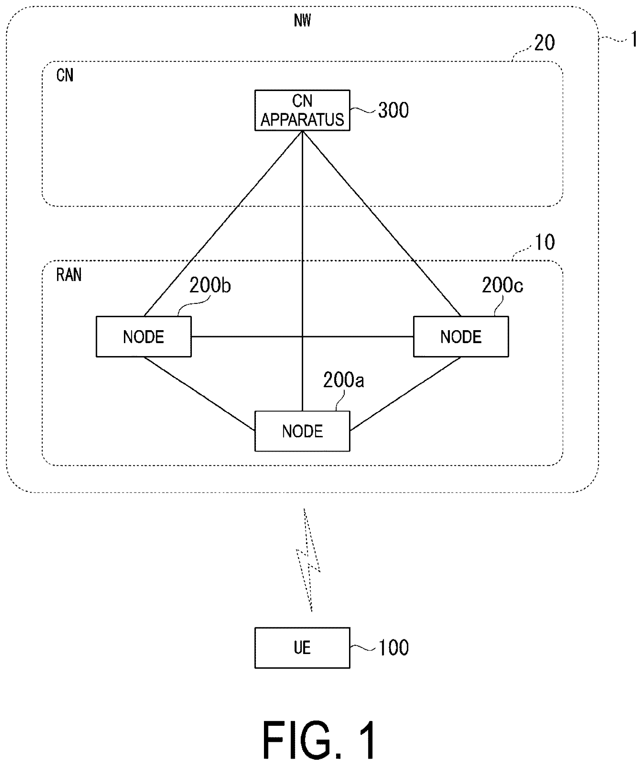

A first embodiment will be described with reference to FIGs. 1 to 7.

### (1.1) System Configuration Example

FIG. 1 is a diagram illustrating a configuration example of a mobile communication system according to an embodiment. The mobile communication system according to the embodiment is a system conforming to the 3GPP standard. For example, the mobile communication system according to the embodiment may be a 5th generation (5G) system or a 6th generation (6G) system.

The mobile communication system includes a network (NW) 1 and a user equipment (UE) 100. The UE 100 is a mobile communication apparatus and performs wireless communication with the NW 1. The UE 100 may be an apparatus used by a user and may be, for example, a mobile phone terminal (including a smartphone), a tablet terminal, a laptop personal computer (PC), a communication module (including a communication card or chipset), a sensor or an apparatus provided in a sensor, a vehicle or an apparatus provided in a vehicle (a vehicle UE), or an aircraft or an apparatus provided in an aircraft (an aerial UE).

The NW 1 includes a radio access network (RAN) 10 and a core network (CN) 20. When the mobile communication system is a 5th generation system (5GS), the RAN 10 is referred to as a next generation radio access network (NG-RAN) and the CN 20 is referred to as a 5G core network (5GC).

The RAN 10 includes a plurality of nodes 200 (nodes 200a to 200c in the illustrated example). The nodes 200 are connected to each other via inter-node interfaces. The node 200 is also referred to as a base station. The node 200 may be configured (that is, functionally divided) into a central unit (CU) and a distributed unit (DU), and both units may be connected by a fronthaul interface. When the mobile communication system is a 5GS, the node 200 is referred to as a gNB, the inter-node interface is referred to as an Xn interface, and the fronthaul interface is referred to as an F1 interface.

Each node 200 manages one or more cells. The node 200 performs wireless communication with the UE 100 that has established a connection with its own cell. Each node 200 has a radio resource management (RRM) function, a routing function for user data (also simply referred to as "data"), a measurement control function for mobility control and scheduling, and the like. Note that a "cell" is used as a term indicating a minimum unit of a wireless communication area. The "cell" is also used as a term indicating a function or a resource for performing wireless communication with the UE 100. One cell belongs to one carrier frequency (also simply referred to as a "frequency").

The CN 20 includes a CN apparatus 300. The CN apparatus 300 may include a control plane (C-plane) apparatus corresponding to the C-plane, and a user plane (U-plane) apparatus corresponding to the U-plane. The C-plane apparatus performs various mobility control, paging, and the like for the UE 100. The C-plane apparatus communicates with the UE 100 using non-access stratum (NAS) signaling. The U-plane apparatus controls the transfer of data. When the mobile communication system is a 5GS, the C-plane apparatus is referred to as an access and mobility management function (AMF), the U-plane apparatus is referred to as a user plane function (UPF), and the interface between the node 200 and the CN apparatus 300 is referred to as an NG interface.

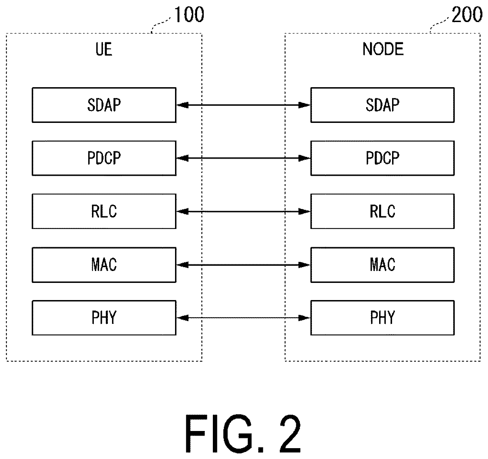

FIG. 2 is a diagram illustrating a configuration example of a protocol stack of a U-plane radio interface that handles data.

The protocol of the U-plane radio interface includes, for example, a physical (PHY) layer, a medium access control (MAC) layer, a radio link control (RLC) layer, a packet data convergence protocol (PDCP) layer, and a service data adaptation protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the node 200 via a physical channel. Note that the PHY layer of the UE 100 receives downlink control information (DCI) transmitted from the node 200 on a physical downlink control channel (PDCCH). Specifically, the UE 100 performs blind decoding of the PDCCH using a radio network temporary identifier (RNTI), and acquires successfully decoded DCI as DCI addressed to the UE. The DCI transmitted from the node 200 has CRC parity bits scrambled by the RNTI added thereto.

The MAC layer performs data priority control and retransmission processing using Hybrid ARQ (HARQ), and the like. Data and control information are transmitted between the MAC layer of UE 100 and the MAC layer of node 200 via a transport channel. The MAC layer of the node 200 includes a scheduler. The scheduler determines the uplink and downlink transport format (transport block size, modulation and coding scheme (MCS)) and the resources to be allocated to the UE 100.

The RLC layer uses the functions of the MAC layer and the PHY layer to transmit data to the RLC layer on the receiving side. Data and control information are transmitted between the RLC layer of the UE 100 and the RLC layer of the node 200 via a logical channel.

The PDCP layer performs header compression/decompression, encryption/decryption, and the like.

The SDAP layer performs mapping between an IP flow, which is a unit for QoS control by the CN 20, and a radio bearer, which is a unit for QoS control by an access stratum (AS). Note that when the RAN is connected to an EPC, the SDAP is not necessary.

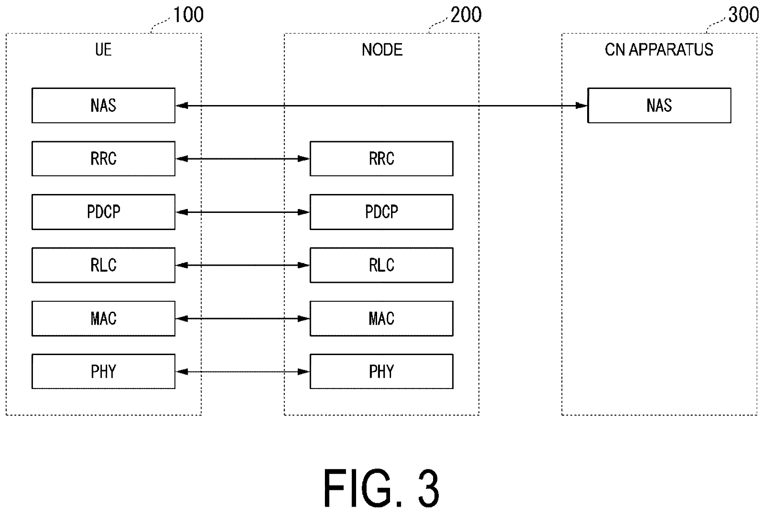

FIG. 3 is a diagram illustrating a configuration example of a protocol stack of a C-plane radio interface that handles signaling (control signal).

The protocol stack of the C-plane radio interface includes, for example, a radio resource control (RRC) layer and a non-access stratum (NAS) layer instead of the SDAP layer illustrated in FIG. 2.

RRC signaling for various settings is transmitted between the RRC layer of the UE 100 and the RRC layer of the node 200. The RRC layer controls the logical channel, the transport channel, and the physical channel according to the establishment, re-establishment and release of radio bearers. When there is a connection (RRC connection) between the RRC of the UE 100 and the RRC of the node 200, the UE 100 is in an RRC connected state. When there is no connection (RRC connection) between the RRC of the UE 100 and the RRC of the node 200, the UE 100 is in an RRC idle state. When the connection between the RRC of the UE 100 and the RRC of the node 200 is suspended, the UE 100 is in an RRC inactive state.

The NAS layer (also simply referred to as "NAS"), which is located above the RRC layer, performs session management, mobility management, and the like. NAS signaling is transmitted between the NAS layer of the UE 100 and the NAS layer of the CN apparatus 300. Note that the UE 100 has an application layer and the like in addition to the radio interface protocol. The layer below the NAS layer is referred to as an AS layer (also simply referred to as "AS").

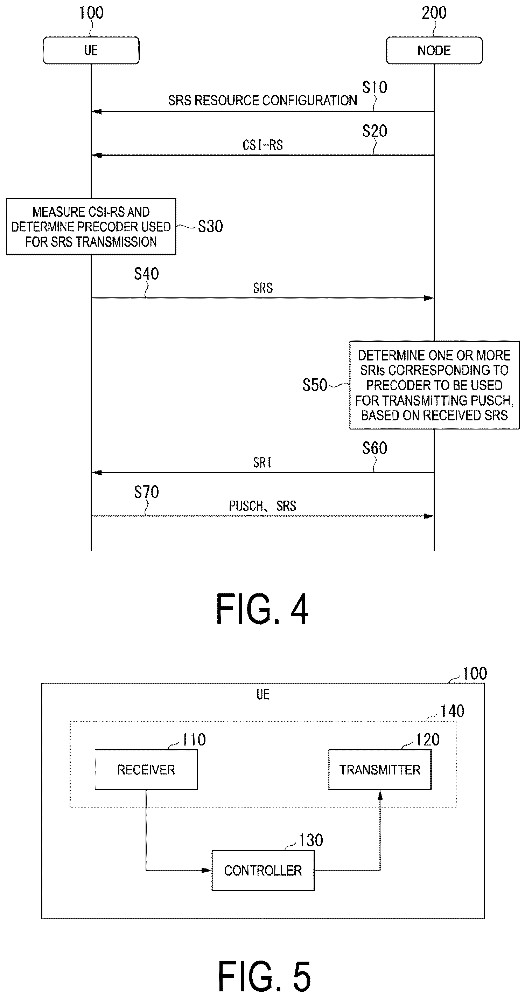

FIG. 4 is a diagram illustrating a general procedure for transmitting a physical uplink shared channel (PUSCH) according to a non-codebook type.

In step S10, the node 200 transmits a resource configuration of a sounding reference signal (SRS) to the UE 100. The UE 100 receives the resource configuration of the SRS. By this resource configuration, the resources (frequency, time, antenna port) of the SRS are set.

In step S20, the node 200 transmits a CSI-RS to the UE 100. The UE 100 receives the CSI-RS.

In step S30, the UE 100 measures the resource of the CSI-RS transmitted in step S20. The UE 100 calculates a precoder to be used for transmitting the SRS based on the measurement of the resource of the CSI-RS.

In step S40, the UE 100 applies the calculated precoder and transmits up to four SRSs to the node 200. For transmitting these SRSs, the SRS resources set by the resource configuration received in step S10 are used. One SRS antenna port is configured for the SRS resource of each SRS.

In step S50, the node 200 determines one or more SRS resource indicators (SRIs) corresponding to a precoder to be used for transmitting the PUSCH, based on the received SRS.

In step S60, the node 200 transmits the determined one or more SRIs to the UE 100. Here, one or more SRIs are included and transmitted in downlink control information (DCI) transmitted on a physical downlink control channel (PDCCH). Here, one or more SRIs are stored in an SRS resource indicator area included in the DCI. The UE 100 receives one or more SRIs. In the non-codebook type transmission method, the node 200 does not notify the UE 100 of a transmit rank indicator (TRI), but the UE 100 determines the TRI from the number of SRIs.

In step S70, the UE 100 transmits the PUSCH to the node 200 using the same antenna port as the antenna port for the SRS. The antenna ports for the SRS are indicated by the received one or more SRIs. Thus, the same precoder as that used for the SRS of the SRS resource indicated by the received SRI is applied to the transmission of the PUSCH.

According to this procedure, two round trips of communication are made between the node 200 and the UE 100 from when the node 200 transmits the CSI-RS to the UE 100 until when the node 200 receives the PUSCH to which the precoder is applied. Thus, particularly in an environment in which a propagation channel varies significantly, there is a problem that the precoder may not be optimal. As a result, there are cases where the throughput is reduced due to an increase in inter-stream interference and a deterioration in modulation accuracy.

### (1.2) Configuration Example of User Equipment

FIG. 5 is a diagram illustrating a configuration example of a user equipment (UE) 100 according to the embodiment.

The UE 100 includes a receiver 110, a transmitter 120, and a controller 130. The receiver 110 and the transmitter 120 constitute a wireless communicator 140 that performs wireless communication with the node 200.

The receiver 110 performs various types of reception under the control of the controller 130. The receiver 110 includes an antenna and a reception device. The reception device converts a radio signal received by the antenna into a baseband signal (a reception signal) and outputs the resulting signal to the controller 130. The transmitter 120 performs various types of transmission under the control of the controller 130. The transmitter 120 includes an antenna and a transmission device. The transmission device converts a baseband signal (a transmission signal) output by the controller 130 into a radio signal and transmits the resulting signal from an antenna.

The controller 130 performs various controls and processes in the UE 100. The operations of the UE 100 described above and below may be operations under the control of the controller 130. The controller 130 includes at least one processor and at least one memory. The memory stores programs executed by the processor and information used in processing by the processor. The processor may include a baseband processor and a central processing unit (CPU). The baseband processor performs modulation/demodulation and encoding/decoding of the baseband signal. The CPU executes programs stored in the memory to perform various processes.

The UE 100 configured in this manner performs wireless communication with the node 200 in the mobile communication system. The receiver 110 receives a first reference signal transmitted by the node 200. The controller 130 measures the resource of the first reference signal, calculates a precoder to be used for transmitting the PUSCH based on the measurement of the resource of the first reference signal, and applies the precoder to the PUSCH. The transmitter 120 transmits, to the node 200, the PUSCH to which the precoder has been applied.

In the present embodiment, the first reference signal is a downlink reference signal used to calculate a precoder to be applied to the transmission of the PUSCH. The first reference signal is, for example, a CSI-RS in 3GPP, but may also be other reference signals such as the DM-RS, the PT-RS, or a new reference signal introduced in the 6th generation. In the following, an example will be described in which the first reference signal is a CSI-RS.

This allows the UE 100 to transmit a PUSCH with a fewer number of round trips of communication than in the procedure of FIG. 4. Even in an environment in which the propagation channel varies significantly, the UE 100 can suppress a decrease in throughput due to an increase in inter-stream interference and a deterioration in modulation accuracy by reducing the number of round trips of communication.

In the present embodiment, the controller 130 determines the number of layers of the PUSCH based on the measurement of the resource of the first reference signal. In the present embodiment, the controller 130 calculates a precoder to be used for transmitting a second reference signal based on measurement of the resource of the first reference signal, selects an antenna port for the determined number of layers of the PUSCH from the antenna ports of the second reference signal, and uses the selected antenna port for the number of layers for transmitting the PUSCH. Thus, the portion of the precoder applied to the transmission of the second reference signal, which is used for the second reference signal of the selected antenna port, is used for the transmission of the PUSCH.

In the present embodiment, the second reference signal is an uplink reference signal used by the node 200 to receive the PUSCH. The second reference signal is, for example, a sounding reference signal (SRS) in 3GPP, but may also be other reference signals such as the DM-RS, the PT-RS, or a new reference signal introduced in the 6th generation. In the following, an example will be described in which the second reference signal is an SRS.

### (1.3) Configuration Example of Node

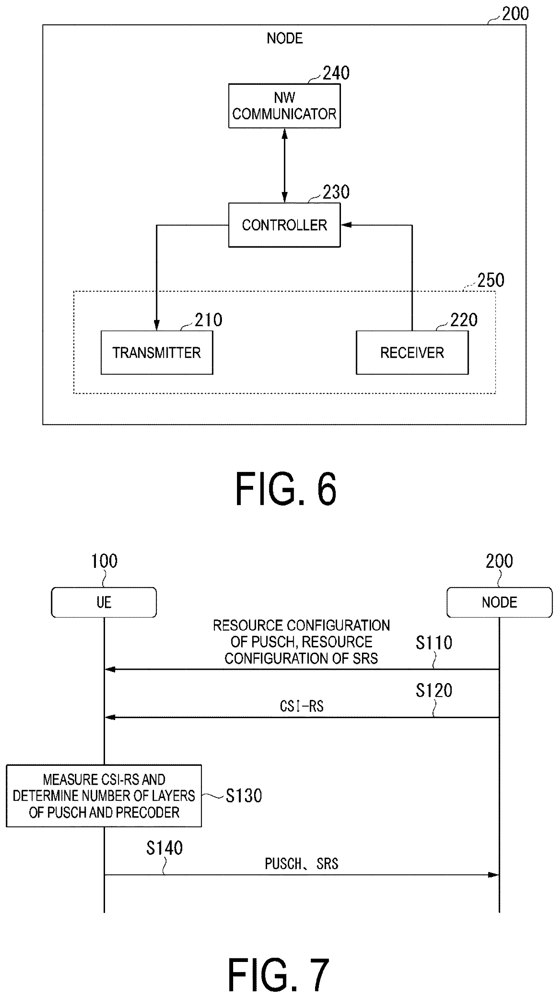

FIG. 6 is a diagram illustrating a configuration example of a node 200 (base station, gNB) according to the embodiment.

The node 200 includes a transmitter 210, a receiver 220, a controller 230, and a NW communicator 240. The transmitter 210 and the receiver 220 constitute a wireless communicator 250 that performs wireless communication with the UE 100.

The transmitter 210 performs various types of transmission under the control of the controller 230. The transmitter 210 includes an antenna and a transmission device. The transmission device converts a baseband signal (a transmission signal) output by the controller 230 into a radio signal and transmits the resulting signal from an antenna. The receiver 220 performs various types of reception under the control of the controller 230. The receiver 220 includes an antenna and a reception device. The reception device converts a radio signal received by the antenna into a baseband signal (a reception signal) and outputs the resulting signal to the controller 230.

The controller 230 performs various controls and processes in the node 200. The operations of the node 200 described above and below may be operations under the control of the controller 230. The controller 230 includes at least one processor and at least one memory. The memory stores programs executed by the processor and information used in processing by the processor. The processor may include a baseband processor and a CPU. The baseband processor performs modulation/demodulation and encoding/decoding of the baseband signal. The CPU executes programs stored in the memory to perform various processes.

The NW communicator 240 is connected to adjacent nodes via an inter-node interface. The NW communicator 240 is connected to the CN apparatus 300 via a node-CN interface.

The node 200 configured in this manner performs wireless communication with the UE 100 in the mobile communication system. The transmitter 210 transmits the first reference signal to the UE 100. The receiver 220 receives the PUSCH from the UE 100. The PUSCH is a PUSCH transmitted by applying a precoder calculated by the UE 100 based on the measurement of the resource of the first reference signal.

### (1.4) Example of System Operation

FIG. 7 is a diagram illustrating an example of a system operation according to the first embodiment. The system operation according to the first embodiment is a method of transmitting a PUSCH to which a UE-determined precoder is applied, that is, a method of transmitting a PUSCH to which a precoder determined by the UE 100 is applied. Note that duplicated descriptions of operations similar to those in FIG. 4 will be omitted.

In step S110, the node 200 transmits a resource configuration of the PUSCH and a resource configuration of the SRS to the UE 100. The node 200 transmits the resource configuration to the UE 100, for example, at the RRC layer. Note that the node 200 may transmit the resource configuration to the UE 100 at the MAC layer, or may transmit the resource configuration to the UE 100 by including the resource configuration in DCI. The UE 100 receives a resource configuration of the PUSCH and a resource configuration of the SRS.

In step S120, the node 200 transmits a CSI-RS to the UE 100. The UE 100 receives the CSI-RS.
Note that the node 200 may transmit the CSI-RS to the UE 100 before transmitting the resource configuration of the PUSCH and the resource configuration of the SRS described above. In other words, the order in which the process of step S120 and the process of step S110 are executed may be reversed from the order illustrated in FIG. 7.

In step S130, the UE 100 measures the resource of the CSI-RS transmitted in step S120. The UE 100 calculates a precoder to be applied to the transmission of the PUSCH and the SRS based on the measurement of the resource of the CSI-RS. The UE 100 determines the number of layers of the PUSCH based on the measurement of the resource of the CSI-RS.

The method by which the UE 100 calculates a precoder to be applied to the transmission of the PUSCH and the SRS based on the measurement of the resource of the CSI-RS is, for example, a method based on singular value decomposition. The UE 100 expresses the results of the measurement of the resource of the CSI-RS as a matrix having rows for the number of antenna ports of the node 200 and columns for the number of antenna ports of the UE 100 (maximum number of layers of the PUSCH). The UE 100 performs singular value decomposition on the matrix. The UE 100 determines whether the magnitude of the singular value obtained by the singular value decomposition is greater than a predetermined threshold. The UE 100 determines that a beam can be transmitted when the magnitude of the singular value is greater than a predetermined threshold. Eigenvectors corresponding to the singular values determined to be transmittable correspond to the precoder weights of the beams (layers) determined to be transmittable, and the number of such eigenvectors corresponds to the number of transmittable layers.
Note that the method by which the UE 100 calculates a precoder to be applied to the transmission of the PUSCH based on the measurement of the resource of the CSI-RS is not limited to a method based on singular value decomposition, and other methods may be used.

In step S140, the UE 100 transmits, to the node 200, the PUSCH to which the calculated precoder has been applied. The node 200 receives the PUSCH. Note that the timing at which the UE 100 transmits the PUSCH to the node 200 is scheduled, for example, by DCI. The UE 100 transmits the PUSCH to the node 200 using the resources set in the resource configuration of the PUSCH received from the node 200 in step S110.

The UE 100 may transmit the SRS to the node 200 before transmitting the PUSCH to the node 200. Note that the UE 100 transmits the SRS to the node 200 using SRS resources of at least the number of layers described above. Note that the UE 100 selects an antenna port for the determined number of layers of the PUSCH from the antenna ports for the SRS, and uses the selected antenna port for transmitting the PUSCH. Thus, the PUSCH with the above-mentioned number of layers is transmitted to the node 200 by applying the same precoder as that used for transmitting the SRS of the selected antenna port.

Note that the transmission of the SRS and the PUSCH from the UE 100 to the node 200 in step S140 may be executed a plurality of times before the processing from step S110 to step S130 is executed the next time. The number of times that the SRS and the PUSCH are transmitted does not have to match.

Here, in the present embodiment, the PUSCH transmission method to which the UE-determined precoder illustrated in FIG. 7 is applied, that is, the PUSCH transmission method to which the precoder determined by the UE 100 is applied, also assumes time division duplex (TDD). The UE 100 can measure the CSI-RS received from the node 200 (that is, can perform channel estimation). The UE 100 utilizes channel reciprocity due to TDD to calculate a precoder to be used for transmitting the PUSCH based on the measurement of the CSI-RS, and also determines the number of layers of the PUSCH. In other words, the UE 100 has the ability to determine the precoder (beam) to be used for transmitting the PUSCH. The advantage of the method of transmitting a PUSCH to which a UE-determined precoder is applied is that the precoder used for transmission can be calculated from the received signal by utilizing channel reciprocity due to TDD. In other words, by executing a series of controls regarding the transmission of the PUSCH in the UE 100 without communicating with the node 200, the precoder can be determined in a shorter time than in the conventional procedure illustrated in FIG. 4.

Note that, in the present embodiment, an example has been described in which the UE 100 (controller 130) determines the number of layers of the PUSCH based on measurement of the resource of the first reference signal (CSI-RS), but the present invention is not limited thereto. The number of layers of the PUSCH does not need to be determined by the UE 100. In this case, for example, the node 200 determines the number of layers of the PUSCH, and the node 200 notifies the UE 100 of the determined number of layers. As another example, the number of layers of the PUSCH may be determined in advance, and the UE 100 may store the number of layers in advance.

In the present embodiment, an example has been described in which the UE 100 (controller 130) calculates a precoder to be used for transmitting a second reference signal (SRS) based on measurement of the resource of the first reference signal (CSI-RS), selects an antenna port for the determined number of layers of the PUSCH from the antenna ports of the second reference signal (SRS), and transmits the PUSCH using the selected antenna port, but the present invention is not limited thereto. The UE 100 may transmit the PUSCH using an antenna port other than the antenna port of the second reference signal (SRS).

### (1.5) Variation of First Embodiment

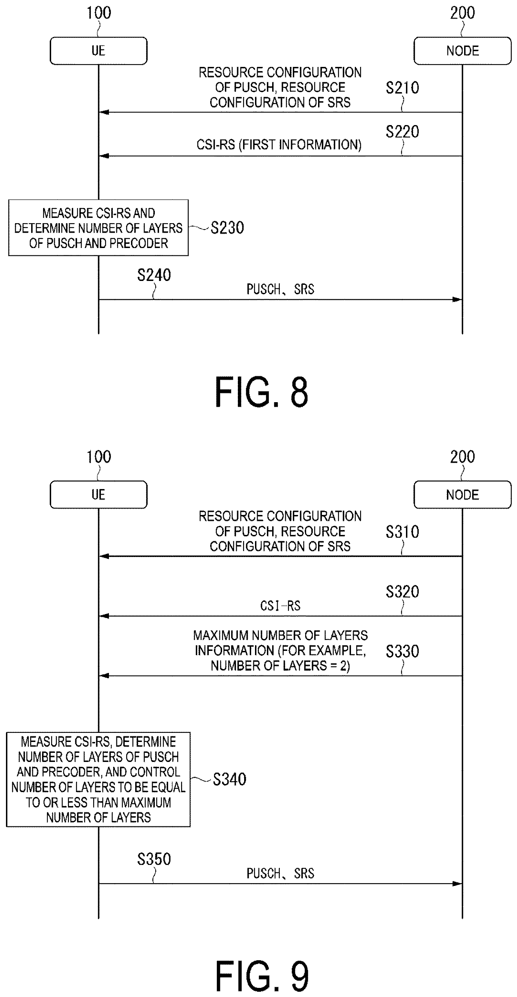

A variation of the first embodiment will be described with reference to FIG. 8, focusing mainly on the differences from the first embodiment. In a variation of the first embodiment, when the receiver 110 receives the first information from the node 200, the transmitter 120 transmits the PUSCH by a PUSCH transmission method to which a UE-determined precoder is applied. In other words, when the receiver 110 receives the first information from the node 200, the transmitter 120 applies the precoder calculated by the controller 130 based on the measurement of the resource of the first reference signal to the transmission of the PUSCH. The first information is information indicating that a PUSCH transmission method in which a UE-determined precoder is applied to the transmission of the PUSCH is used.

FIG. 8 is a diagram illustrating an example of a system operation according to a variation of the first embodiment. Note that the processes of steps S210, S230, and S240 are similar to the processes of steps S110, S130, and S140 in FIG. 7, and therefore descriptions thereof will be omitted.

In step S220, the node 200 transmits a CSI-RS to the UE 100. The first information is included in the CSI-RS. Here, the first information being included in the CSI-RS means that the CSI-RS is transmitted based on a sequence corresponding to the use of a PUSCH transmission method in which a UE-determined precoder is applied to the transmission of the PUSCH. That is, there are two types of CSI-RS: CSI-RS that indicates that a PUSCH transmission method to which a UE-determined precoder is applied is used, and CSI-RS that indicates that a PUSCH transmission method to which a UE-determined precoder is applied is not used. These two types of CSI-RS have different sequences for generating the CSI-RS.

When the UE 100 receives the first type of CSI-RS, the UE 100 determines to use a PUSCH transmission method to which a UE-determined precoder is applied to the transmission of the PUSCH, that is, to apply a precoder determined by the UE 100. On the other hand, when the UE 100 receives the second type of CSI-RS, the UE 100 determines not to use the PUSCH transmission method in which the UE-determined precoder is applied to the transmission of the PUSCH, that is, to use a general non-codebook type transmission method as illustrated in FIG. 4.

When the UE 100 determines that the CSI-RS includes the first information, the UE 100 executes the processes of step S230 and step S240. On the other hand, when the UE 100 determines that the CSI-RS does not include the first information, the UE 100 executes subsequent processing based on a general procedure (processing from step S30 onward in FIG. 4) in which a precoder determined in the non-codebook type is applied to transmit the PUSCH.

Note that in the variation of the first embodiment, an example in which the first information is included in the CSI-RS has been described, but the present invention is not limited thereto. The first information may be included in the DCI transmitted from the node 200 to the UE 100, or may be transmitted in the RRC layer. The first information may be transmitted for all subsequent PUSCH transmissions, or may be transmitted for one PUSCH transmission.

When the controller 130 determines that the channel reciprocity between the uplink and the downlink is satisfied, the controller 130 may use a PUSCH transmission method to which a UE-determined precoder is applied. In this case, the controller 130 determines whether the channel reciprocity is satisfied, for example, as follows. The controller 130 determines that channel reciprocity is satisfied, for example, when time division duplex (TDD) is used as the communication method and the uplink and downlink frequencies are the same or the difference is within a threshold. As another example, the controller 130 determines that the channel reciprocity is satisfied when the moving speed of the UE 100 is slow enough to realize the channel model reciprocity.

The controller 130 may determine whether to use time division duplex based on a frequency band to which a component carrier used by the UE 100 for communication with the node 200 belongs.

### (2) Second Embodiment

A second embodiment will be described with reference to FIG. 9, focusing mainly on the differences from the first embodiment. In the above-described first embodiment, the number of layers of the PUSCH transmitted by the UE 100 is not shared between the node 200 and the UE 100. Therefore, the node 200 has to execute reception processing assuming the maximum value of the number of layers. In other words, the node 200 has to execute blind decoding. The node 200 knows the number of antenna ports of the node 200 itself, or the number of antenna ports of the UE 100, or the maximum number of layers in the capability of the UE 100. However, the node 200 does not know the number of layers determined by the UE 100. Therefore, the node 200 has to execute reception processing based on the number of antenna ports of the node 200 itself, or the number of antenna ports of the UE 100, or the maximum number of layers in the capability of the UE 100. For example, even when the number of layers is one and transmission is being performed by the UE 100, the node 200 has to perform reception processing assuming eight as the number of layers. This poses a problem that power consumption may worsen compared to a case in which the node 200 knows the number of layers.

In the present embodiment, the receiver 110 receives the maximum number of layers information from the node 200. The maximum number of layers information is information indicating the maximum value of the number of layers of the PUSCH transmitted by the transmitter 120. The controller 130 controls the number of layers of the PUSCH to be equal to or less than the maximum value indicated by the maximum number of layers information.

### (2.1) Example of System Operation

An example of a system operation according to the second embodiment will be described with reference to FIG. 9, focusing mainly on the differences from the first embodiment. FIG. 9 is a diagram illustrating an example of a system operation according to the second embodiment. Note that the processes of steps S310, S320, and S350 are similar to the processes of steps S110, S120, and S140 in FIG. 7, and therefore descriptions thereof will be omitted.

In step S330, the node 200 transmits maximum number of layers information to the UE 100. The maximum value of the number of layers indicated by the maximum number of layers information is, for example, two. The node 200 transmits the maximum number of layers information to the UE 100, for example, by including the information in DCI. Note that in 3GPP, in the case of a codebook-type transmission method, the node 200 transmits maximum number of layers information to the UE 100 by using a predetermined area in a predetermined format of DCI. On the other hand, in 3GPP, this area is not used in non-codebook type transmission method. Therefore, even in a PUSCH transmission method to which a UE-determined precoder is applied, the maximum number of layers information is transmitted using this area, thereby making effective use of DCI resources.

The maximum number of layers information may also be transmitted in the MAC layer. The maximum number of layers information may be transmitted in the RRC layer.

Note that in the present embodiment, the maximum number of layers information is transmitted after the CSI-RS is transmitted, but the present invention is not limited thereto. The maximum number of layers information may be transmitted before the CSI-RS is transmitted. In other words, the process of step S330 may be executed before the process of step S320.

Note that when the receiver 110 of the UE 100 (controller 130) receives the maximum number of layers information from the node 200, the UE 100 (controller 130) may use a PUSCH transmission method to which a UE-determined precoder is applied to the transmission of the PUSCH. That is, the UE 100 may use the maximum number of layers information as the above-mentioned first information.

In step S340, the UE 100 executes the process of step S130 described above while controlling the number of layers of the PUSCH to be equal to or less than the maximum value indicated by the maximum number of layers information.

The UE 100 controls the number of layers of the PUSCH to be equal to or less than the maximum value indicated by the maximum number of layers information, for example, as follows. For example, when all four singular values obtained as a result of the singular value decomposition are greater than a predetermined threshold, the number of layers is four. According to the result of the singular value decomposition, the number of layers is four, but when the maximum value indicated by the maximum number of layers information is two, the UE 100 sets the number of layers to two, selects the two largest singular values among the four singular values, and selects the eigenvectors corresponding to the selected singular values.

Note that when receiving the PUSCH in step S350, the node 200 performs the reception processing assuming the maximum value indicated by the maximum number of layers information as the number of layers.

### (3) Third Embodiment

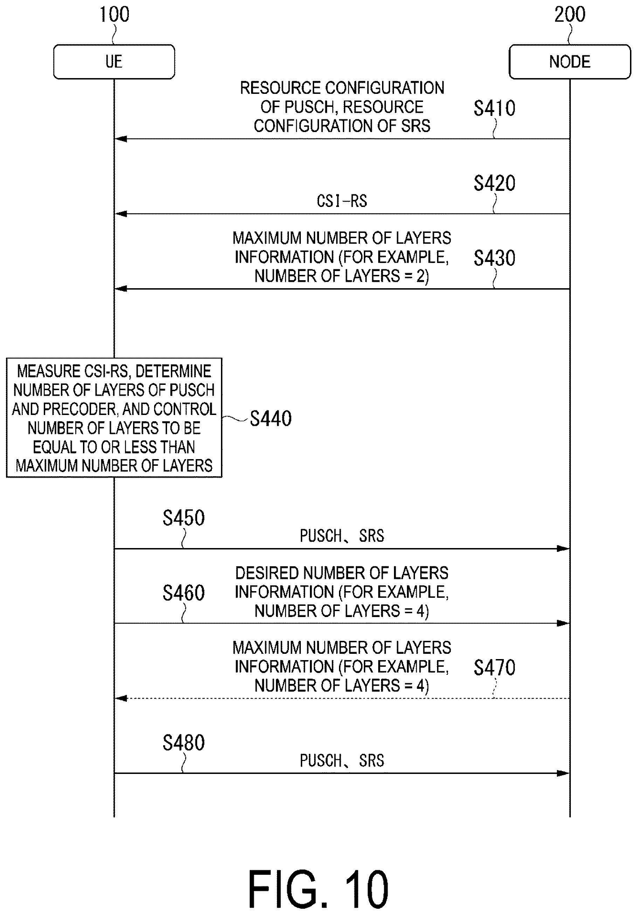

A third embodiment will be described with reference to FIG. 10, focusing mainly on the differences from the second embodiment. In the above-described second embodiment, the case has been described in which the node 200 reduces deterioration of power consumption in the reception processing by transmitting maximum number of layers information to the UE 100. However, according to the control of the second embodiment, even when the amount of data of the PUSCH that the UE 100 attempts to transmit increases, or even when the channel condition of the uplink improves, the number of layers cannot be made larger than the maximum value indicated by the maximum number of layers information. For example, even in a situation where a PUSCH can be transmitted with the number of layers set to six in practice, when the maximum value indicated by the maximum number of layers information is four, the PUSCH can be transmitted only with the number of layers set to four. As a result, the control of the second embodiment has a problem in that the channel capacity cannot be utilized to the maximum.

In the present embodiment, the transmitter 120 transmits desired number of layers information to the node 200. The desired number of layers information is information indicating a desired number of layers, which is the maximum number of layers desired by UE 100. In the present embodiment, the transmitter 120 transmits the desired number of layers information to the node 200 when the desired number of layers is greater than the maximum value indicated by the maximum number of layers information.

### (3.1) Example of System Operation

An example of a system operation according to the third embodiment will be described with reference to FIG. 10, focusing mainly on the differences from the second embodiment. In FIG. 10, non-essential steps are indicated by dashed lines. FIG. 10 is a diagram illustrating an example of a system operation according to the third embodiment. Note that the processes of steps S410, S420, S430, S440, and S450 are similar to the processes of steps S310, S320, S330, S340, and S350 in FIG. 9, and therefore descriptions thereof will be omitted.

In step S460, the UE 100 transmits desired number of layers information to the node 200. The desired number of layers indicated by the desired number of layers information is, for example, four. The UE 100 determines the desired number of layers, for example, as follows.

When the UE 100 determines that the amount of data (buffer amount) to be transmitted using a PUSCH has become equal to or greater than a predetermined amount of data, the UE 100 determines the desired number of layers to be a number greater than the current number of layers. In another example, the UE 100 may determine the number of layers of the PUSCH determined based on the measurement of the resource of the CSI-RS as the desired number of layers. In another example, when the UE 100 determines that the amount of data (buffer amount) to be transmitted using the PUSCH has become equal to or greater than a predetermined amount of data, the UE 100 may determine the number of layers of the PUSCH determined based on the measurement of the resource of the CSI-RS as the desired number of layers.

In step S470, the node 200 transmits the maximum number of layers information again to the UE 100. The maximum value of the number of layers indicated by the maximum number of layers information is, for example, four. Here, the node 200 determines the maximum number of layers based on desired number of layers information received from the UE 100. The node 200 transmits maximum number of layers information indicating the determined maximum number of layers to the UE 100.
Note that instead of transmitting the maximum number of layers information again to the UE 100, the node 200 may transmit a response (ACK) to the UE 100 indicating that the desired number of layers indicated by the desired number of layers information is permitted as the maximum number of layers.

Note that in step S460, instead of transmitting the desired number of layers, the UE 100 may transmit, to the node 200, a request to increase the maximum number of layers or a request indicating the amount of increase.

Note that the processes of steps S460 and S470 may be executed before the process of step S440, or before the process of step S450.

In step S480, the UE 100 determines the number of layers based on the maximum number of layers information retransmitted from the node 200 or the desired number of layers, and transmits a PUSCH and an SRS to the node 200. In step S470, when the maximum number of layers information has been transmitted from the node 200 to the UE 100, the UE 100 determines the number of layers based on the maximum number of layers information. In step S470, when a response indicating that the desired number of layers indicated by the desired number of layers information is permitted is transmitted from the node 200 to the UE 100, the UE 100 determines the desired number of layers as the maximum number of layers. Note that similarly to step S450 (step S140), the UE 100 transmits the SRS to the node 200 before transmitting the PUSCH to the node 200.

The node 200 executes reception processing assuming the maximum value indicated by the retransmitted maximum number of layers information or the desired number of layers indicated by the desired number of layers information received from the UE 100 as the number of layers.

Note that after step S450 and before step S460, the node 200 may transmit the CSI-RS again to the UE 100. When the CSI-RS is transmitted again, in step S460, the UE 100 may determine the number of layers of the PUSCH determined based on the measurement of the resource of the retransmitted CSI-RS as the desired number of layers.

### (4) Fourth Embodiment

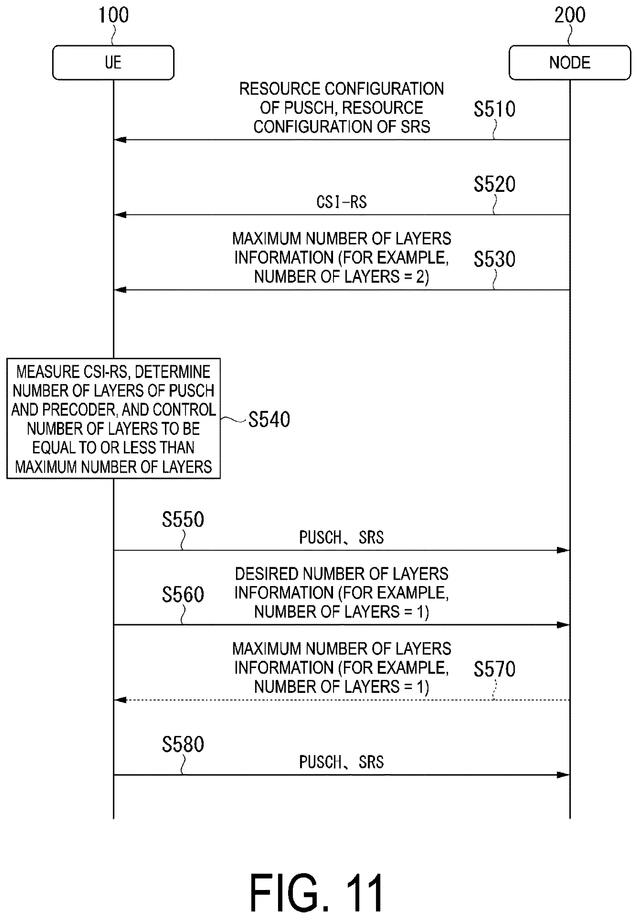

A fourth embodiment will be described with reference to FIG. 11, focusing mainly on the differences from the second embodiment. In the above-described second embodiment, the case has been described in which the node 200 reduces deterioration of power consumption in the reception processing by transmitting maximum number of layers information to the UE 100. However, according to the control of the second embodiment, even when the amount of data of the PUSCH that the UE 100 attempts to transmit decreases or even when the channel condition of the uplink deteriorates, the node 200 has to execute reception processing assuming the maximum value indicated by the maximum number of layers information as the number of layers. As a result, the control of the second embodiment has a problem in that unnecessary power consumption may occur.

In the present embodiment, the transmitter 120 transmits the desired number of layers information to the node 200 when the desired number of layers is smaller than the maximum value indicated by the maximum number of layers information.

### (4.1) Example of System Operation

An example of a system operation according to the fourth embodiment will be described with reference to FIG. 11, focusing mainly on the differences from the second embodiment. In FIG. 11, non-essential steps are indicated by dashed lines. FIG. 11 is a diagram illustrating an example of a system operation according to the fourth embodiment. Note that the processes of steps S510, S520, S530, S540, and S550 are similar to the processes of steps S310, S320, S330, S340, and S350 in FIG. 9, and therefore descriptions thereof will be omitted.

In step S560, the UE 100 transmits desired number of layers information to the node 200. The desired number of layers indicated by the desired number of layers information is, for example, one. The UE 100 determines the desired number of layers, for example, as follows.

When the UE 100 determines that the amount of data (buffer amount) to be transmitted using a PUSCH has become equal to or less than a predetermined amount of data, the UE 100 determines the desired number of layers to be a number smaller than the current number of layers. In another example, the UE 100 may determine the number of layers of the PUSCH determined based on the measurement of the resource of the CSI-RS as the desired number of layers. In another example, when the UE 100 determines that the amount of data (buffer amount) to be transmitted using the PUSCH has become equal to or less than a predetermined amount of data, the UE 100 may determine the number of layers of the PUSCH determined based on the measurement of the resource of the CSI-RS as the desired number of layers.

In step S570, the node 200 transmits the maximum number of layers information again to the UE 100. The maximum value of the number of layers indicated by the maximum number of layers information is, for example, one. Here, the node 200 determines the maximum number of layers based on desired number of layers information received from the UE 100. The node 200 transmits maximum number of layers information indicating the determined maximum number of layers to the UE 100.
Note that instead of transmitting the maximum number of layers information again to the UE 100, the node 200 may transmit a response (ACK) to the UE 100 indicating that the desired number of layers indicated by the desired number of layers information is permitted as the maximum number of layers.

Note that in step S560, instead of transmitting the desired number of layers, the UE 100 may transmit, to the node 200, a request to reduce the maximum number of layers or a request indicating the amount of reduction.

Note that the processes of steps S560 and S570 may be executed before the process of step S540, or before the process of step S550.

In step S580, the UE 100 determines the number of layers based on the maximum number of layers information retransmitted from the node 200 or the desired number of layers, and transmits a PUSCH and an SRS to the node 200. In step S570, when the maximum number of layers information has been transmitted from the node 200 to the UE 100, the UE 100 determines the number of layers based on the maximum number of layers information. In step S570, when a response indicating that the desired number of layers indicated by the desired number of layers information is permitted is transmitted from the node 200 to the UE 100, the UE 100 determines the desired number of layers as the maximum number of layers. Note that similarly to step S550 (step S140), the UE 100 transmits the SRS to the node 200 before transmitting the PUSCH to the node 200.

The node 200 executes reception processing assuming the maximum value indicated by the retransmitted maximum number of layers information or the desired number of layers indicated by the desired number of layers information received from the UE 100 as the number of layers.

Note that after step S550 and before step S560, the node 200 may transmit the CSI-RS again to the UE 100. When the CSI-RS is transmitted again, in step S560, the UE 100 may determine the number of layers of the PUSCH determined based on the measurement of the resource of the retransmitted CSI-RS as the desired number of layers.

### (5) Fifth Embodiment

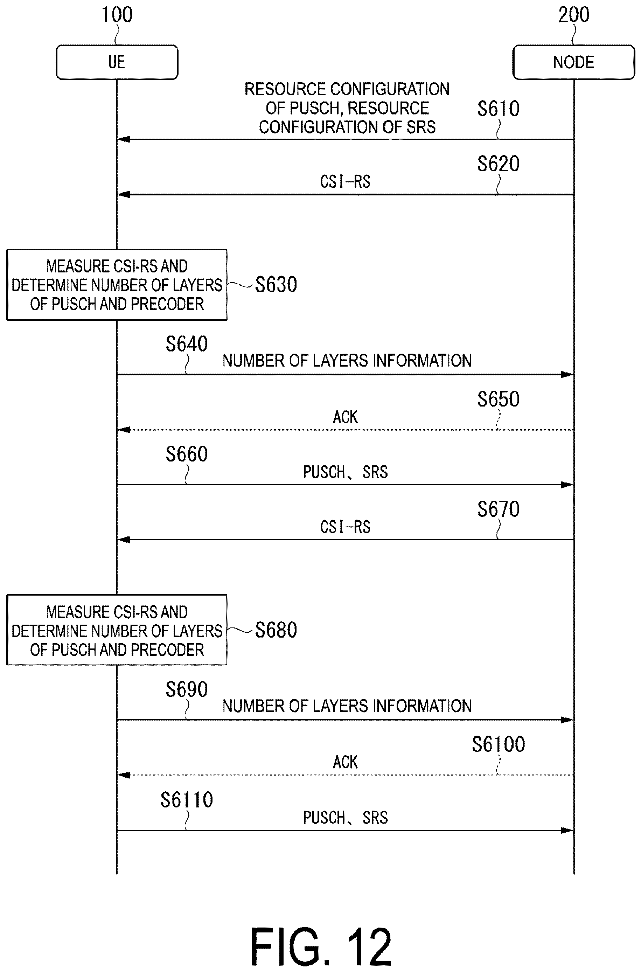

A fifth embodiment will be described with reference to FIG. 12, focusing mainly on the differences from the second embodiment. In the above-described second embodiment, the case has been described in which the node 200 reduces deterioration of power consumption in the reception processing by transmitting maximum number of layers information to the UE 100. However, the control of the second embodiment has a problem in that the number of layers cannot be changed dynamically.

In the present embodiment, the transmitter 120 transmits, to the node 200, number of layers information indicating the number of layers of the PUSCH.

Thus, by the UE 100 dynamically changing the number of layers, it is possible to increase system capacity and reduce power consumption of the node 200 even when channel conditions change rapidly in an environment in which wireless communication using high frequency bands such as millimeter waves or sub-terahertz waves is used.

### (5.1) Example of System Operation

An example of a system operation according to the fifth embodiment will be described with reference to FIG. 12, focusing mainly on the differences from the second embodiment. In FIG. 12, non-essential steps are indicated by dashed lines. FIG. 12 is a diagram illustrating an example of a system operation according to the fifth embodiment. Note that the processes of steps S610, S620, S630, and S660 are similar to the processes of steps S310, S320, S340, and S350 in FIG. 9, and therefore descriptions thereof will be omitted.

In step S640, the UE 100 transmits number of layers information to the node 200. The node 200 receives the number of layers information. Here, the UE 100 determines, for example, the number of layers of the PUSCH determined based on the measurement of the resource of the CSI-RS as the number of layers indicated by the number of layers information.

In step S650, the node 200 transmits, to the UE 100, a response (ACK) indicating that the number of layers information has been received. The node 200 may, for example, transmit the response by including the response in DCI. Note that when the node 200 does not receive the number of layers information in step S640, the node 200 may determine that the number of layers indicated by the number of layers information last received from the UE 100 is continuously used for transmitting the PUSCH.

The processes of steps S670, S680, S690, S6100, and S6110 are similar to the processes of steps S620, S630, S640, S650, and S660, and therefore descriptions thereof will be omitted. Thereafter, the processes of steps S670, S680, S690, S6100, and S6110 are repeatedly executed.

Note that in FIG. 12, an example has been described in which the process including steps S640 and S650 is executed once while the process of step S660 is executed one time. In other words, an example has been described where there is a one-to-one correspondence between the transmission of a PUSCH and the process including the transmission of number of layers information and the transmission of a response indicating that the number of layers information has been received, but the present invention is not limited thereto. The process including steps S640 and S650 may be executed once while the process of step S660 is executed a plurality of times. In other words, a plurality of transmissions of the PUSCH may correspond to one process including the transmission of number of layers information and the transmission of a response indicating that the number of layers information has been received.

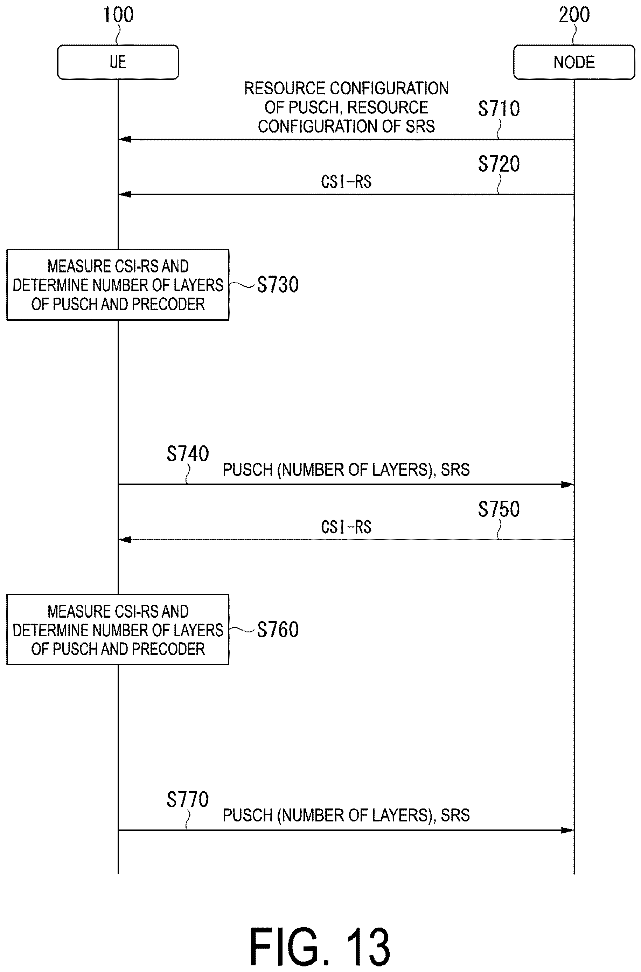

A variation of the fifth embodiment will be described with reference to FIG. 13, focusing mainly on the differences from the fifth embodiment. In the variation of the fifth embodiment, the transmitter 120 transmits, to the node 200, the PUSCH including number of layers information indicating the number of layers of the PUSCH to be transmitted next time.

### (5.2) Variation of Fifth Embodiment

FIG. 13 is a diagram illustrating an example of a system operation according to a variation of the fifth embodiment. Note that the processes of steps S710, S720, S730, S750, and S760 are similar to the processes of steps S610, S620, S630, S670, and S680 in FIG. 12, and therefore descriptions thereof will be omitted.

In step S740, the UE 100 transmits, to the node 200, number of layers information indicating the number of layers of the PUSCH to be transmitted next time, by including the number of layers information in the transmission of the PUSCH. The PUSCH to be transmitted next time is the PUSCH transmitted by the UE 100 in step S770. Note that similarly to step S550 (step S140), the UE 100 transmits the SRS to the node 200 before transmitting the PUSCH to the node 200.

The process of step S770 is similar to the process of step S740, and therefore a description thereof will be omitted. Thereafter, the processes of steps S750, S760, and S770 described above are repeatedly executed.

Note that in the present variation, an example has been described in which number of layers information indicating the number of layers of the PUSCH to be transmitted next time is included in the transmission of the PUSCH, but the present invention is not limited thereto. The UE 100 may transmit, to the node 200, number of layers information indicating the number of layers of the PUSCH to be transmitted next time, by including the number of layers information in the transmission of a PUCCH.

A program may be provided that causes a computer (the UE 100, the node 200) to execute the operations according to the above-described embodiments. The program may be recorded on a computer-readable medium. The computer-readable medium allows the program to be installed on a computer. Here, the computer-readable medium on which the program is recorded may be a non-transitory recording medium. The non-transitory recording medium is not particularly limited, but may be, for example, a recording medium such as a CD-ROM or a DVD-ROM.

Although one embodiment of the present invention has been described in detail above with reference to the drawings, the specific configuration is not limited to the above, and various design changes, and the like are possible within the scope that does not deviate from the gist of the present invention.

### REFERENCE SIGNS

1: Network
10: RAN
20: CN
100: UE
110: Receiver
120: Transmitter
130: Controller
140: Wireless communicator
200: Node
210: Transmitter
220: Receiver
230: Controller
240: NW communicator
250: Wireless communicator
300: CN apparatus

## Claims

1. A user equipment for performing wireless communication with a node in a mobile communication system, the user equipment comprising:
a receiver configured to receive a first reference signal transmitted by the node;
a controller configured to measure a resource of the first reference signal, calculate a precoder to be used for transmitting a physical uplink shared channel based on the measurement of the resource of the first reference signal, and apply the precoder to the physical uplink shared channel; and
a transmitter configured to transmit, to the node, the physical uplink shared channel to which the precoder has been applied.

2. The user equipment according to claim 1, wherein the controller is configured to determine the number of layers of the physical uplink shared channel based on the measurement of the resource of the first reference signal.

3. The user equipment according to claim 2, wherein the controller is configured to calculate a precoder to be used for transmitting a second reference signal based on the measurement of the resource of the first reference signal, select an antenna port for the number of layers from antenna ports of the second reference signal, and use the selected antenna port for the number of layers for transmission of the physical uplink shared channel.

4. The user equipment according to claim 1, wherein the transmitter is configured to use the precoder for transmission of the physical uplink shared channel when the receiver receives, from the node, first information indicating that the precoder is to be used for transmission of the physical uplink shared channel.

5. The user equipment according to claim 4, wherein the first information is included in the first reference signal.

6. The user equipment according to claim 4, wherein the first information is included in downlink control information transmitted from the node to the user equipment.

7. The user equipment according to claim 1, wherein the controller is configured to use the precoder for transmission of the physical uplink shared channel when determining that channel reciprocity between an uplink and a downlink is satisfied.

8. The user equipment according to claim 2, wherein
the receiver is configured to receive, from the node, maximum number of layers information indicating a maximum value of the number of layers transmitted by the transmitter, and
the controller is configured to control the number of layers to be equal to or less than the maximum value indicated by the maximum number of layers information.

9. The user equipment according to claim 8, wherein the controller is configured to use the precoder for transmission of the physical uplink shared channel when the receiver receives the maximum number of layers information from the node.

10. The user equipment according to claim 8, wherein the transmitter is configured to transmit, to the node, desired number of layers information indicating a desired number of layers, which is a desired maximum number of layers.

11. The user equipment according to claim 10, wherein the transmitter is configured to transmit the desired number of layers information to the node when the desired number of layers is greater than the maximum value indicated by the maximum number of layers information.

12. The user equipment according to claim 10, wherein the transmitter is configured to transmit the desired number of layers information to the node when the desired number of layers is smaller than the maximum value indicated by the maximum number of layers information.

13. The user equipment according to claim 2, wherein the transmitter is configured to transmit number of layers information indicating the number of layers to the node.

14. The user equipment according to claim 13, wherein the transmitter is configured to transmit, to the node, the physical uplink shared channel including the number of layers information indicating the number of layers of a physical uplink shared channel to be transmitted next time.

15. A node for performing wireless communication with a user equipment in a mobile communication system, the node comprising:
a transmitter configured to transmit a first reference signal to the user equipment; and
a receiver configured to receive, from the user equipment, a physical uplink shared channel that is transmitted by the user equipment by applying a precoder calculated based on measurement of a resource of the first reference signal.

16. A communication method used in a user equipment for performing wireless communication with a node in a mobile communication system, the communication method comprising:
receiving a first reference signal transmitted by the node;
measuring a resource of the first reference signal, calculating a precoder to be used for transmission of a physical uplink shared channel based on the measurement of the resource of the first reference signal, and applying the precoder to the physical uplink shared channel; and
transmitting, to the node, the physical uplink shared channel to which the precoder has been applied.

17. A communication method used in a node for performing wireless communication with a user equipment in a mobile communication system, the communication method comprising:
transmitting a first reference signal to the user equipment; and
receiving, from the user equipment, a physical uplink shared channel that is transmitted by the user equipment by applying a precoder calculated based on measurement of a resource of the first reference signal.
